# EUROPEAN PATENT SPECIFICATION

(11) **EP 2 395 878 B1**
(45) Date of publication and mention of the grant of the patent: **17.04.2013**
(21) Application number: 10705836.4
(22) Date of filing: 09.02.2010
(51) Int. Cl.: A47C 7/18, A47C 7/20, B60N 2/70, B29C 44/58, B29C 45/00, B29C 65/66

(54) **SEAT ELEMENT MOULDED FROM EXPANDABLE AND RETICULABLE POLYOLEFIN MATERIAL**
AUS EINEM DEHNBAREN UND VERNETZBAREN POLYOLEFINMATERIAL GEFORMTES SITZELEMENT
ELÉMENT DE SIÈGE MOULÉ À PARTIR D'UN MATÉRIAU À BASE DE POLYOLÉFINE EXPANSIBLE ET RÉTICULABLE

(30) Priority: 13.02.2009 IT MC20090028
(43) Date of publication of application: 21.12.2011
(73) Proprietor: FINPROJECT S.P.A., 62010 Morrovalle (MC) (IT)
(72) Inventor: VECCHIOLA, Maurizio, I-63014 Montegranaro (AP) (IT)
(74) Representative: Baldi, Claudio
(86) International application number: PCT/EP2010/051582
(87) International publication number: WO 2010/092048

(56) References cited:
- EP-A1- 0 520 577
- EP-A2- 0 802 041
- DE-A1- 2 717 268
- DE-U1-202006 013 633
- FR-A5- 2 046 644
- GB-A- 859 314
- US-A- 5 772 822

## Description

The present patent application for industrial invention relates to a manufacturing method of a seat element made of expandable and reticulable polyolefin material, especially for vehicles.

The term "seat element" refers to seat, back and headrest. The present invention is not exclusively limited to seats for vehicles, and is also extended to interior decoration seats, such as tools, armchairs, sofas and similar items.

As it is known, expandable and reticulable polyolefin materials are characterised by properties of lightness, softness, resistance to wear and water, thus being especially suitable for manufacturing various kinds of seats.

Nevertheless, expandable and reticulable polyolefin materials are generally not used to manufacture seat elements because they are impaired by some drawbacks during the preparation and realisation process.

In fact, these items are manufactured by injecting into the mould plastic material that expands and reticulates inside it. The mould is maintained at a certain temperature in such a way to ensure that, during the cycle-time in which the material is closed inside the mould, the reticulation of the material and decomposition of expanding loads are performed.

When the mould is opened, the product is spontaneously released from the mould because of its violent expansion, continues on expanding and then starts shrinking during cooling. The expansion and shrinking processes cannot be controlled exactly, thus giving high rates of rejects during industrial production.

Consequently, the result would be a seat element that does not comply with the dimensional requirements established at design level and is difficult to use for modular assembly with other elements.

Moreover, it must be considered that expandable materials are mostly soft materials. Therefore, a seat element using these materials should be coupled with a support frame in order to make it stiffer and use it. The coupling of the seat element with the support frame is not simple due the dimensional changes of the seat after moulding, expansion and reticulation. In fact, if the seat element is provided with holes to receive fixing means, these holes may not match the holes of the frame.

Therefore, coupling of the seat element with the frame is complex and expensive, requiring a special adjustment of the seat element and/or frame.

The patent application DE 27 17 268 discloses a seat element made of expanded polyurethane. Although the appearance of expanded polyurethane is similar to expanded polyolefin, it must be noted that the two technologies differ in their production process. Therefore, as it is known, in the polyurethane technology, the seat element is obtained from moulding and left in the mould to cool down.

The patent application DE 20 2006 013633 discloses a seat element comprising a support made of rigid material and a covering coupled with the support in such a way to form a cavity between support and covering. The cavity is filled by injecting a filling material. The covering made of polyurethane, polyolefin or other waterproof material is a premoulded covering. Therefore, the expanded covering (which could also have a polyolefin base) is a stable material that has already been subject to reticulation and consequently is no longer subject to dimensional changes.

The support and premoulded covering are arranged in a mould, in which filling material is injected. The covering made (also) of polyolefin material is subject to thermoforming, but the polyolefin inside the covering is not subject to reticulation or dimensional change.

EP 0 802 041 discloses an injection moulding process for soles in expandable and crosslinking EVA, wherein a template, consisting in a thin and flexible plate, is placed on the upper surface of the sole, off the mould and during cooling. Then the template is extracted from the sole after cooling.

The purpose of the present invention is to eliminate the drawbacks of the known art, by devising a manufacturing method of a seat element made of expanded material that complies perfectly with the dimensional features of the original design and, at the same time, is inexpensive and simple to produce and install.

This purpose has been achieved according to the present invention, with the characteristics illustrated in the attached independent claim 1.

Advantageous embodiments are disclosed in the dependent claims.

The manufacturing method of a seat element according to the present invention comprises the phases as claimed in claim 1.

The new manufacturing process provides for a first expansion phase of the seat after opening the mould, and a thermoretraction phase during which the seat is reduced (thermoretraction) to the desired dimensions during cooling.

The use of the template results in a series of advantages:
- it allows for perfectly control of the final dimensions of the body of the seat element;
- it offers a stiffening system of the seat element;
- it is provided with stable and resistant fixing means in order to anchor the seat to a frame.

Additional characteristics of the invention will appear evident from the following detailed description, which refers to merely illustrative, not limiting embodiments, illustrated in the enclosed drawings, wherein:
Fig. 1 is a perspective view of a first embodiment of the seat element, in which the body of expanded material has just come out of the mould;
Fig. 2 is a cross-sectional view of the seat element of Fig. 1 after assembly and before thermoretraction of the body of expanded material;
Fig. 3 is a cross-sectional view of the seat element of Fig. 2 after assembly, after thermoretraction of the body of expanded material;
Fig. 4 is a cross-sectional view of the seat element of Fig. 3 mounted on a frame;
Fig. 5 is the same as Fig. 2, except for it shows a second embodiment of the seat element of the invention; and
Fig. 6 is a cross-sectional view of the seat element of Fig. 5 mounted on a frame.

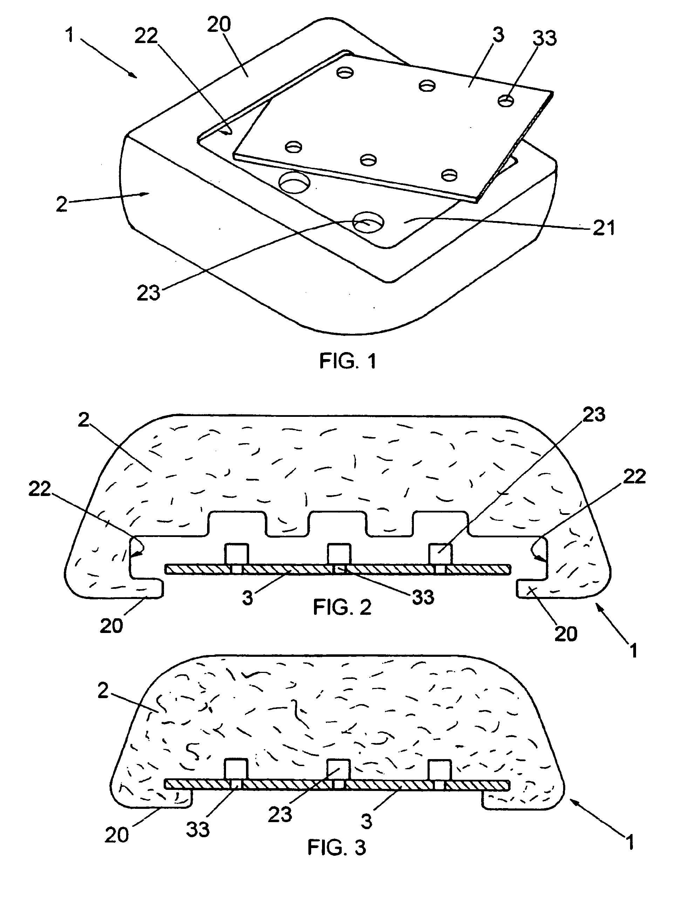

Referring to Figs. 1 - 4 a first embodiment of a seat element is disclosed, being generally indicated with numeral (1).

The seat element (1) comprises a body (2) of soft material and a template (3) of rigid material.

The body (2) is made of expandable and reticulable polyolefin material, by means of injection moulding. The polyolefin material is injected into the mould, heated and subject to reticulation process. During the reticulation process the polyolefin material expands, taking the shape of the mould. The expansion of the polyolefin material continues and then the body is released spontaneously from the mould.

It must be considered that the mould is small scale compared to the seat to be manufactured (for example, a mould with cavity 50% smaller than the seat can be made).

The body (2) is provided on the back surface with a perimeter frame (20) that defines a recessed seat (21) adapted to receive the template (3). The internal borders of the perimeter frame (20) define housings in undercut (22) having an overturned-U shape, adapted to receive the borders of the template (3).

Fig. 1 shows a body (2) of the seat element with basically parallelepiped shape with a rectangular back frame (20); however, the body (2) can be given any type of shape, with circular or polygonal perimeter.

Preferably, the housings in undercut (22) are obtained along the entire internal perimeter of the frame (20); however, only two housings in undercut (22) can be provided on opposite sides of the frame (20). Blind holes (23) are obtained in the back seat (21) of the body (2), being adapted to receive fixing means, such as nuts or bolts.

The template (3) consists in a plate made of rigid material, such as for example metal or PVC or Polyamide (Nylon). A flat rectangular template is shown in this first embodiment of the invention; however, the template can also be curved.

The template (3) is provided with through holes (33) to receive fixing means, such as screws or bolts. The holes (33) can also be threaded. In any case the holes (33) of the template are arranged in register with the blind holes (23) of the body (2). The holes (23) of the body have a higher diameter than the holes (33) of the template because they must receive nuts and because they must compensate possible misalignment mistakes.

The template (3) is dimensioned in compliance with the specific dimensions of the seat element to be obtained.

In fact, when the body (2) is spontaneously released from the mould, the material of the body continues its expansion process. Once the expansion process is completed, the template (3) is inserted in the recessed seat (21) of the body (2). As shown in Fig. 2, the borders of the template (3) are received with clearance in the housings in undercut (22) of the body.

The body (2) shrinks during cooling. Accordingly, as shown in Fig. 3, the housings in undercut (22) of the body press on the borders of the template (3) eliminating any clearance and interrupting thermoretraction.
In this way the template (3) is firmly anchored to the body (2) and at the same time prevents additional thermoretraction of the body (2). Therefore, the body (2) perfectly complies with the dimensional specifications of the template (3), regardless of the free thermoretraction that would have been suffered by the material of the body (2).

In addition to act as control element of the dimensions of the body (2), the template (3) also acts as stiffening element of the body (2), without the need to provide the body (2) with stiffening ribs that increase the complexity of the mould and without the need to use stiffening inserts that are difficult to match with the body (2).

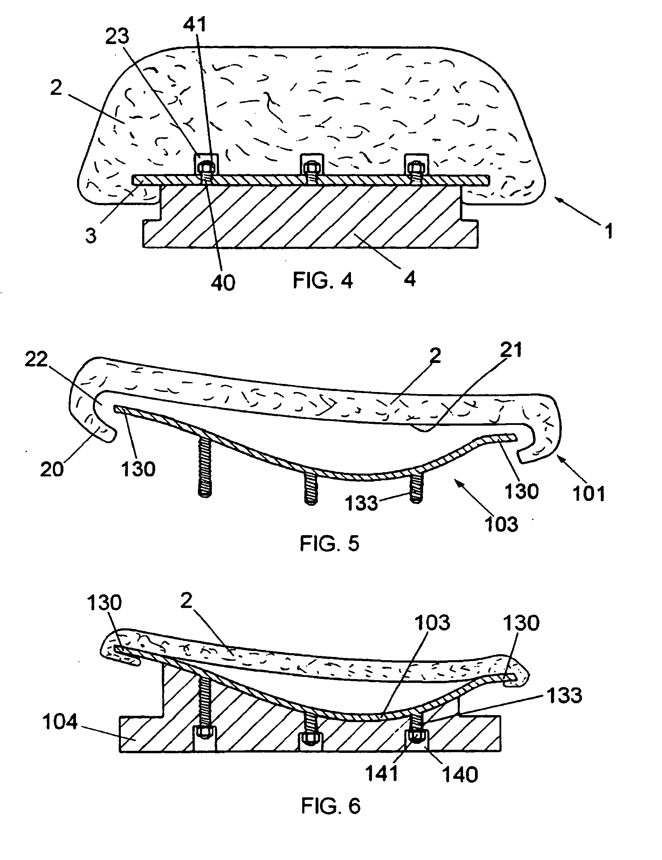

Moreover, as shown in Fig. 4, the template (3) also acts as fixing means with a frame (4) to anchor the seat (1) to the frame (4).

In fact, the frame (4) can be provided with screws (40) arranged in register with the holes (33) of the template.

In this case, the body (2) is disassembled from the template (3); then the template (3) is fixed to the frame (4) inserting the screws (40) in the holes (33) of the template and screwing the nuts (41) on the screws (40); finally, the body (2) is assembled again on the template (3) in such a way that the nuts (41) are received in the blind holes (23) of the body (2).

It must be noted that assembly is possible because of the fact that, once it has cooled down completely, the expanded reticulated material maintains the original dimensions also without the template.

In the following text identical elements or elements that correspond to elements that have already been described are indicated with the same reference numerals, omitting their detailed description.
Figs. 5 and 6 show a seat element (101) according to a second embodiment of the invention, wherein the template (103) is provided with screw fixing means (133) instead of holes. Accordingly, the frame (104) is provided with holes (140) to receive the screws (133) of the template. Nuts (141) are screwed to the screws (133) of the template to fix the frame. In this case, it is not necessary to disassemble the body (2) from the template (103) and assemble it again on the template after fixing the template to the frame (104).

Figs. 5 and 6 show a concave template (103) provided with two flat sections (130) on opposite borders that are inserted in the housings in undercut (22) of the body (2). Accordingly, also the frame (104) must have a concave seat to receive the template (103).

Numerous variations and modifications can be made to the present embodiments of the invention by an expert of the field, while still falling within the scope of the invention as claimed in the enclosed claims.

## Claims

1. Manufacturing method of a seat element (1; 101) comprising the following phases:
- injection into a mould of expandable and reticulable polyolefin material,
- reticulation and expansion of said polyolefin material inside the mould, in such a way to obtain a body (2) having the shape of the mould,
- spontaneous release of the body (2) from the mould due to expansion,
- prosecution of expansion of the body (2) outside the mould until expansion is completed, and
- coupling of said body (2) with a template (3, 103) made of rigid material, when the body (2) has completed expansion and before the material of the body shrinks during cooling, and
- cooling and thermoretraction of the body (2) controlled by the template (3; 103), in such a way that the body complies with the original specifications of the template,
wherein the template (3) acts as stiffening element of the body (2), and
fixing means (33, 133) are provided on the template (3; 103) and the template is fixed to a support frame (4, 104), so that the template (3) acts as fixing means with the frame (4, 104) to anchor the seat (1) to the frame (4, 104).

2. Method as claimed in claim 1, **characterised in that** the cavity of mould is smaller than seat to be obtained.

3. Method as claimed in claim 2, **characterised in that** the cavity of mould is 50% smaller than seat to be obtained.

4. Method as claimed in anyone of the preceding claims, **characterised in that** the mould is shaped in such a way that the body (2) is provided on the back surface with a recessed seat (21) with slightly smaller area than the surface of the body and said template (3; 103) is inserted in the recessed seat.

5. Method as claimed in claim 4, **characterised in that** the mould is shaped in such a way that the body (2) has a perimeter frame (20) that defines the recessed seat (21), housings in undercut (22) are obtained in the internal borders of the perimeter frame (20), and the borders of the template (3; 103) are inserted in the housings in undercut (22).

6. Method as claimed in anyone of the preceding claims, **characterised in that** the template is fixed to the frame with screw means (40) of the frame that cross the through holes (33) obtained on the template.

7. Method as claimed in claim 1, **characterised in that** the template is fixed to the frame with screw means (133) of the template that are inserted in holes (140) of the frame.

## Patentansprüche

1. Verfahren zur Herstellung eines Sitzelements (1; 101) umfassend folgende Schritte:
- Einspritzen von vernetzendem Polyolefin-Dehnstoff in eine Form,
- Vernetzung und Dehnung des Polyolefin-Materials im Innern der Form, um einen Körper (2) zu erhalten, der das Profil der Form aufweist,
- spontanes Entformen des Körpers (2) aus der Form aufgrund seiner Dehnung,
- Fortsetzung der Dehnung des Körpers (2) außerhalb der Form bis zum Ende seiner Dehnungsphase und
- Kopplung des Körpers (2) mit einer Schablone (3; 103) aus starrem Material nach Beendigung der Dehnungsphase des Körpers (2) und vor Beginn der anschließenden Schrumpfungsphase des Materials des Körpers während seiner Abkühlung und
- Abkühlung und durch die Schablone (3; 103) kontrollierte Wärmeschrumpfung des Körpers (2), so dass der Körper die Größenvorgaben der Schablone einhält,
wobei die Schablone (3; 103) als Versteifungselement des Körpers dient und Befestigungsmittel (33, 133) auf der Schablone (3; 103) vorgesehen sind und die Schablone so auf einem Tragrahmen (4;104) befestigt ist, dass die Schablone als Mittel zur Befestigung am Rahmen (4; 104) dient, um den Sitz (1) am Rahmen (4, 104) zu verankern.

2. Verfahren nach Anspruch 1, **dadurch gekennzeichnet, dass** der Hohlraum der Form einen gegenüber dem herzustellenden Sitz verkleinerten Maßstab aufweist.

3. Verfahren nach Anspruch 2, **dadurch gekennzeichnet, dass** der Hohlraum der Form einen gegenüber dem herzustellenden Sitz um 50% verkleinerten Maßstab aufweist.

4. Verfahren nach einem der vorstehenden Ansprüche, **dadurch gekennzeichnet, dass** die Form so gestaltet ist, dass der Körper (2) auf der rückwärtigen Oberfläche einen eingelassenen Sitz (21) aufweist, der eine etwas kleinere Erstreckung als die Oberfläche des Körpers besitzt und die Schablone (3; 103) in den eingelassenen Sitz eingesetzt wird.

5. Verfahren nach Anspruch 4, **dadurch gekennzeichnet, dass** die Form so gestaltet ist, dass der Körper (2) einen umlaufenden Rahmen (20) aufweist, der den eingelassenen Sitz (21) definiert, wobei in den Innenkanten des umlaufenden Rahmens (20) unter sich gehende Sitze (22) herausgearbeitet sind und die Kanten der Schablone (3; 103) in die unter sich gehenden Sitze (22) eingesetzt sind.

6. Verfahren nach einem der vorstehenden Ansprüche, **dadurch gekennzeichnet, dass** die Schablone an dem Rahmen mittels Schraubenmitteln (40) des Rahmens befestigt ist, die durch aus der Schablone herausgearbeitete, durchgehende Löcher (33) hindurchgehen.

7. Verfahren nach Anspruch 1, **dadurch gekennzeichnet, dass** die Schablone an dem Rahmen mittels Schraubenmitteln (133) der Schablone befestigt ist, die in die Löcher (140) des Rahmens eingesteckt sind.

## Revendications

1. Méthode de production d'un élément d'assise (1 ; 101) comprenant les étapes suivantes :
- injection dans un moule de matière polyoléfinique expansible et réticulable,
- réticulation et expansion de la dite matière polyoléfinique dans un moule, de manière à obtenir un corps (2) ayant le profil du moule,
- éjection spontanée du dit corps (2) du moule suite à son expansion,
- continuation de l'expansion du corps (2) hors du moule jusqu'à la fin de sa phase d'expansion, et
- couplage du dit corps (2) avec un gabarit (3 ; 103) réalisé en matériel rigide, lorsque le corps (2) a terminé sa phase d'expansion et avant le commencement d'une successive phase de contraction de la matière du dit corps pendant son refroidissement, et
- refroidissement et thermo-contraction du corps (2) contrôlée par le dit gabarit (3 ; 103), de façon que le corps respecte les spécifications dimensionnelles du gabarit,
où le gabarit (3 ; 103) fonctionne en tant qu'élément de raidissement du corps (2), et
des moyens de fixations (33, 133) étant prévus sur le gabarit (3 ; 103) et le gabarit étant fixé sur un châssis de support (4, 104), de manière à ce que le gabarit fonctionne en tant que moyen de fixation avec le châssis (4, 104) pour ancrer l'assise (1) au châssis (4, 104).

2. Méthode selon la revendication 1, **caractérisée en ce que** la cavité du moule est à échelle réduite par rapport à l'assise à réaliser.

3. Méthode selon la revendication 2, **caractérisée en ce que** la cavité du moule est de 50% plus petite de l'assise à réaliser.

4. Méthode selon l'une quelconque des revendications précédentes, **caractérisée en ce que** le dit moule est façonné de manière que le dit corps (2) présente sur sa surface postérieure un siège enchâssé (21) dont l'extension est légèrement inférieure par rapport à la surface du corps et que le dit gabarit (3 ; 103) est inséré dans le dit siège enchâssé.

5. Méthode selon la revendication 4, **caractérisée en ce que** la cavité du moule est façonnée de manière que le dit corps (2) présente un cadre de périmètre (20) qui définit le dit siège enchâssé (21) et que dans les bords internes du dit cadre de périmètre (20) sont réalisés des sièges en contre-dépouille (22) et les bords du dit gabarit (3 ; 103) sont insérés dans les dits sièges en contre-dépouille (22).

6. Méthode selon l'une quelconque des revendications précédentes, **caractérisée en ce que** le dit gabarit est fixé au dit châssis à l'aide de moyens à vis (40) du châssis qui traversent des trous passants (33) réalisés sur le gabarit.

7. Méthode selon la revendication 1, **caractérisée en ce que** le dit gabarit est fixé au châssis à l'aide de moyens à vis (133) du gabarit qui sont insérés dans les trous (140) du châssis.
